# EUROPÄISCHE PATENTSCHRIFT

(11) **EP 2 334 861 B1**
(45) Veröffentlichungstag und Bekanntmachung des Hinweises auf die Patenterteilung: **11.07.2012**
(21) Anmeldenummer: 09781844.7
(22) Anmeldetag: 14.08.2009
(51) Int. Cl.: D06F 39/00, D06F 39/08

(54) **VORRICHTUNG ZUR ERWÄRMUNG VON BETRIEBSWASSER FÜR EIN WASSERFÜHRENDES HAUSHALTGERÄT ZUR PFLEGE VON WÄSCHESTÜCKEN UND HAUSHALTGERÄT MIT EINER SOLCHEN VORRICHTUNG**
DEVICE FOR HEATING PROCESS WATER FOR A WATER-CARRYING HOUSEHOLD APPLIANCE FOR THE CARE OF LAUNDRY ITEMS, AND HOUSEHOLD APPLIANCE HAVING SUCH A DEVICE
DISPOSITIF DE RÉCHAUFFAGE DE L'EAU DE SERVICE POUR APPAREIL MÉNAGER À CONDUITE D'EAU POUR L'ENTRETIEN DE PIÈCES DE LINGE, ET APPAREIL MÉNAGER PRÉSENTANT UN TEL DISPOSITIF

(30) Priorität: 10.09.2008 DE 102008041955
(43) Veröffentlichungstag der Anmeldung: 22.06.2011
(73) Patentinhaber: BSH Bosch und Siemens Hausgeräte GmbH, 81739 München (DE)
(72) Erfinder: FOCHEM, Manfred, verstorben (DE); MOSCHÜTZ, Harald, 14979 Großbeeren (DE); SCHAUB, Hartmut, 14656 Brieselang (DE); SCHULZE, Ingo, 16341 Panketal (DE)
(86) Internationale Anmeldenummer: PCT/EP2009/060541
(87) Internationale Veröffentlichungsnummer: WO 2010/028927

(56) Entgegenhaltungen:
- EP-A- 0 030 341
- EP-A- 1 111 118
- WO-A-2007/060582
- DE-A1- 3 905 222
- DE-A1- 4 403 737

## Beschreibung

Die Erfindung betrifft eine Vorrichtung zur Erwärmung von Betriebswasser für ein wasserführendes Haushaltgerät, insbesondere ein Haushaltgerät zur Pflege von Wäschestücken.

Bei Waschmaschinen wird das von einem Versorgungsnetz zulaufende Wasser, das im Weiteren auch als Betriebswasser bezeichnet wird, mithilfe einer elektrischen Heizeinrichtung von der Zulauftemperatur bis zur eingestellten Waschtemperatur erwärmt. Die dafür benötigte Energie stellt einen Großteil der für einen Waschgang benötigten Energie dar. Die Temperatur des zulaufenden Betriebswassers ist typischerweise deutlich geringer als die Temperatur des Raumes, in dem das Haushaltgerät aufgestellt ist. So weist beispielsweise in Berlin das bei den Verbrauchern eingespeiste Betriebswasser an der Wasseruhr typischerweise eine Temperatur zwischen 13°C und 15°C auf. Die Waschgeräte sind häufig in einem Raum innerhalb von Wohnungen und Gebäuden aufgestellt. Die Temperatur von Innenräumen liegt typischerweise zwischen 20°C und 25°C und kann im Sommer auch teilweise deutlich darüber liegen und insbesondere auch bis 30°C erreichen. Bei einer längeren Nichtbenutzung nehmen alle Teile die Temperatur des Aufstellraums an.

Eine Wasch- oder Geschirrspülmaschine mit einem Latentwärmespeicher, welcher zum Erwärmen von zugeführten Frischwasser ausgebildet ist, ist aus DE 44 03 737 A1 bekannt. Dabei ist der Latentwärmespeicher derart mit einem Wärmetauscher, dessen Primärkreis aus einer Abwasser führenden Leitung und dessen Sekundärkreis aus der Leitung des zuzuführenden Frischwassers gebildet wird, verbunden, dass Wärme des Abwassers an den Latentwärmespeicher abgeführt und wieder an das zuzuführende Frischwasser zugeführt werden kann. Ein weiteres derartiges wasserführendes Haushaltgerät ist auch in DE 199 60 812 A1 offenbart.

Eine Vorrichtung zur Erwärmung von Betriebswasser für eine Waschmaschine und eine Waschmaschine mit einer solchen Vorrichtung sind in WO 2007/060582 A1 offenbart. Die Vorrichtung ist zur Wärmespeicherung einer Wärmeenergie und zur Abgabe der Wärmeenergie an das Betriebswasser ausgebildet ist, wobei die Vorrichtung zur Speicherung der ihr umgebenen Wärmeenergie ausgebildet ist.

Eine weitere Waschmaschine mit einem Speicher für Betriebswasser, das die Umgebungswärme aufnehmen kann ist in DE 39 05 222 A1 offenbart.

Es ist Aufgabe der vorliegenden Erfindung, eine alternative Vorrichtung bzw. ein Haushaltgerät zu schaffen, mit der bzw. mit dem die Erwärmung von Betriebswasser für ein wasserführendes Haushaltgerät energieeffizient und kostengünstig erfolgen kann.

Diese Aufgabe wird durch eine Vorrichtung, welche die Merkmale nach Anspruch 1 aufweist, und durch ein Haushaltgerät gemäß Anspruch 14 gelöst.

Eine erfindungsgemäße Vorrichtung zur Erwärmung von Betriebswasser für ein wasserführendes Haushaltgerät, welches vorzugsweise ein Haushaltgerät zur Pflege von Wäschestücken ist, ist zur Wärmespeicherung einer Wärmeenergie in der Umgebung der Vorrichtung und zur Abgabe der Wärmeenergie an das Betriebswasser ausgebildet. Durch die Vorrichtung kann somit ein energieeffizientes Erwärmen des Betriebswassers für das Haushattgerät erreicht werden, da die üblicherweise in der Umgebung der Vorrichtung und auch des Haushaltgeräts höhere Temperatur im Vergleich zum Betriebswasser aufgenommen und an das Betriebswasser abgegeben wird. Die Temperatur des Betriebswassers in dem Haushaltgerät bei einem ablaufenden Waschvorgang muss daher nur noch um einen deutlich geringeren Temperaturwert erhöht werden, als dies bei herkömmlichen Haushaltgeräten der Fall ist. Dabei wird vorzugsweise Wärmeenergie aus der die Vorrichtung, umgebenen Raumluft der Vorrichtung zur Wärmespeicherung zugeführt. Auf diese Weise kann das dem Haushaltgerät zugeführte Betriebswasser einfach auf Raumtemperatur erwärmt werden. Die Vorrichtung kann dabei sehr einfach und kostengünstig aufgebaut werden, da beispielsweise kein Sekundärkreis eines aus dem Stand der Technik bekannten Wärmetauschers erforderlich wird.

Ferner ist die Vorrichtung als latenter Wärmeenergiespeicher ausgebildet. Dies ist besonders vorteilhaft, da die aufgenommene Wärmeenergie auch in der Vorrichtung gespeichert werden kann und bedarfsgerecht abgegeben werden kann. Die Energieeffizienz kann dadurch nochmals erhöht werden.

Die Vorrichtung umfasst einen Wärmetauscher mit einem Speichermedium für die Wärmeenergie und kann ein Latentwärmespeicher mit einem derartigen Wärmetauscher sein. Ferner ist die Temperatur des Phasenübergangs des Arbeitsmedium des wärmetauschers auf eine Temperatur zwischen 20°C und 22°C eingestellt. In der Phase der Nichtnutzung des Haushaltgeräts wird das Speichermedium des Wärmetauschers durch Energieaufnahme aus dem Aufstellraum verflüssigt. Bei einem Wassereinlass erfolgt eine Phasenumwandlung dieses Speichermediums und dieses gibt serine latent gespeicherte Energie an das Betriebswasser bzw. das Zulaufwasser ab. Eine derartige Ausgestaltung eines latenten Wärmespeicher ist in der Lage, mit geringen Speichenvolumen große Energiemengen zu speichern.

Vorzugsweise ist die Vorrichtung an das Wasserversorgungsnetz angeschlossen und mit dem Haushaltgerät verbunden. Somit ist vorgesehen, dass die Vorrichtung in die Zulaufeinrichtung eingebunden ist und somit keine zusätzlichen externen weiteren Geräte vorgesehen werden müssen. Die Vorrichtung kann somit komponentenminimiert und positionsoptimal in das ganze Zulaufsystem integriert werden.

Insbesondere ist die Vorrichtung zur Aufnahme einer für ein Wasch- und/oder Spülprogramm erforderlichen Menge von Betriebswasser, insbesondere von mindestens 10 l, ausgebildet. Dies ist eine besonders vorteilhafte Ausführung, da diesbezüglich eine so große Menge mit der gespeicherten Wärmeenergie temperaturmäßig beaufschlagt werden kann, die nachfolgend auch für ein gewähltes Wasch- und/oder Spülprogramm erforderlich ist. Somit können auch sehr große Mengen von Betriebswasser durch die Vorrichtung erwärmt werden, so dass dies sich auch vorteilhaft für die nachfolgende vollständige Verwendung bei einem Waschvorgang auswirkt.

Nicht zuletzt ist die Vorrichtung auch dahingehend konzipiert, dass sie gerade auch so große Mengen von Betriebswasser effizient mit der Wärmeenergie beaufschlagen kann und somit auch eine relativ große Temperaturerhöhung von so großen Mengen von Betriebswasser durch die Vorrichtung erreicht werden kann.

Insbesondere ist die Vorrichtung zur Abgabe der aufgenommenen Wärmeenergie an das Betriebswasser in einer deaktivierten Phase des Haushaltgeräts ausgebildet. Dieser Energiespeicher wird somit in der Phase der Nichtbenutzung des Haushaltgeräts aufgeladen und auf die Temperatur in der Umgebung der Vorrichtung, insbesondere in einem Aufstellraum des Haushaltgeräts, gebracht. Beim Wasserzulauf wird die dabei aufgenommene Energie an das zulaufende Betriebswasser abgegeben.

Gerade in dieser Phase ist es besonders vorteilhaft, eine entsprechende Wärmeenergiebeaufschlagung des Betriebswassers durchzuführen, da es dann bei einer nachfolgenden Verwendung bei einem Waschprogramm bereits mit einer deutlich höheren Temperatur vorliegt und dem wasserführenden Haushaltgerät insbesondere dem Waschgerät bzw. dem Haushaltgerät zur Pflege von Wäschestücken, zugeleitet werden kann.

In besonders vorteilhafter Weise ist das Speichermedium eines derartigen Wärmetauschers das zulaufende Betriebswasser selbst. In besonders vorteilhafter Weise ist somit die Vorrichtung dahingehend konzipiert, dass bezüglich dieser Ausgestaltung das Betriebswasser selbst im Hinblick auf diese Energieaufnahme das Speichermedium bildet.

Vorzugsweise weist die Vorrichtung zur Erwärmung von Betriebswasser einen Behälter zur Aufnahme des Betriebswassers auf, weicher zur Aufnahme der Wärmeenergie ausgebildet ist. Durch diese Ausgestaltung kann ein direkter Kontakt des Betriebswassers mit Behälterwänden erreicht werden, wodurch eine direkte thermische Kopplung gegeben ist, wodurch eine besonders effektive Wärmeübertragung der gespeicherten Wärmeenergie von dem Behälter auf das Betriebswasser erfolgen kann.

Insbesondere ist die Vorrichtung so ausgestaltet, dass ein derartiger Behälter extern zum Haushaltgerät angeordnet ist, insbesondere in einem Einbaumöbel angeordnet, insbesondere dort integriert, ist. Besonders vorteilhaft erweist es sich, wenn ein derartiger Behälter in einer Arbeitsplatte eingebaut und integriert ist, wobei sich vorzugsweise das Haushaltgerät unter dieser Arbeitsplatte befindet. Somit kann bauraumoptimiert eine derartige Vorrichtung angeordnet und bereitgestellt werden.

Alternativ ist die Vorrichtung zur Erwärmung des Betriebswassers von dem wasserführenden Haushaltgerät selbst umfasst. Als besonders günstig hat es sich erwiesen, wenn die Vorrichtung in der Arbeitsplatte des Haugeräts integriert ist. Vorzugsweise ist in dem Behälter ein gewundener, insbesondere schlangenförmig ausgebildeter, Strömungskanal ausgebildet. Durch diese Ausgestaltung kann die Führung des in den Behälter einlaufenden Betriebswassers besonders effektiv dahingehend gestaltet werden, dass es möglichst viel und oft mit den Wänden des Behälters, in denen die Wärmeenergie durch Temperaturerhöhung der Behälterwärme gespeichert ist, in Berührung kommt. Der Strömungskanal kann als Rohrstruktur in dem Bauteil des Einbaumöbels, insbesondere der Arbeitsplatte, ausgebildet sein. Vorzugsweise ist dieser Strömungskanal so dimensioniert, dass ein möglichst großes Wasservolumen aufgenommen werden kann.

Eine besonders vorteilhafte Ausführung dazu ergibt sich, wenn der Strömungskanal durch die Innenwände des Behälters und durch zusätzliche separate Trennwände im Behälter gebildet bzw. begrenzt wird. Nahezu das vollständige Innenvolumen des Behälters kann somit für die Aufnahme des Betriebswassers und zur Bildung des Strömungskanals konzipiert werden. Gerade eine derartige Ausgestaltung ermöglicht einerseits, eine große Menge von Betriebswasser, beispielsweise auch bis zu 15 I und mehr, aufzunehmen, und gewährleistet darüber hinaus dies dennoch in einer besonders kompakten und mit minimalen Ausmaßen versehenen Ausgestaltung des Behälters.

Vorzugsweise ist vorgesehen, dass am Eingang und/oder am Ausgang der Vorrichtung, insbesondere am Eingang und/oder am Ausgang des Behälters, Absperrelemente, insbesondere Ventile, angeordnet sind. Derartige Ventile zur Steuerung des Wasserzulaufs und des Wasserablaufs können somit vor oder nach dem Speicher angeordnet sein. Befindet sich das Ventil vor dem Speicher, ist vorzugsweise vorgesehen, durch eine geeignete Anordnung des Speichers oder eine spezielle Auslaufsicherung sicherzustellen, dass das in dem Energiespeicher, insbesondere dem Behälter, befindliche Betriebswasser nach Beendigung des Füllvorgangs nicht in unerwünschter Weise weitergeleitet wird oder in unerwünschter Weise ausläuft.

Durch die Ausgestaltung eines Strömungskanals in dem Behälter wird verhindert, dass sich das relativ kalte zulaufende Betriebswasser in unerwünscht starker Weise mit dem bereits erwärmten, in dem Behälter befindlichen, Betriebswasser vermischt. Vorzugsweise sind die Eingänge und die Ausgänge der Vorrichtung, insbesondere des Behälters, und auch der Strömungskanal so angeordnet und ausgebildet, dass durch das zulaufende relativ kalte Betriebswasser, das bereits erwärmte Betriebswasser ausgeschoben oder aus dem Behälter gedrückt wird. Dies weist somit dann keine unerwünschte Abkühlung durch das zulaufende Betriebswasser auf.

Für den Fall dass die Vorrichtung extern zum Haushaltgerät angeordnet ist, ist vorzugsweise an einer dem Haushaltgerät zugewandten Seite der Vorrichtung eine Einrichtung zur Wärmeisolation ausgebildet. Insbesondere kann vorgesehen sein, dass die Einrichtung eine an der Innenseite des Behälters angeordnete Wärmeisolationsschicht aufweist. Durch eine derartige Ausgestaltung kann ein Wärmeübergang aus dem Inneren des Haushaltgeräts an die Vorrichtung und eine damit verbundene Kondensation von Raumluftfeuchte an der Innenseite verhindert werden. Dies würde nämlich einen Teil der gespeicherten Wärmeenergie wieder entziehen und somit den effektiven Wärmeübergang zur Aufheizung des Betriebswassers in der Vorrichtung wieder reduzieren.

Derartige Wärmeisolationen können auch entsprechend an der vom Haushaltgerät umfassten Vorrichtung zur Erwärmung des Betriebswassers vorgesehen sein.

Insbesondere kann vorgesehen sein, dass beispielsweise bei einer Temperatur des zulaufenden Betriebswassers von etwa 15°C und einer Umgebungstemperatur der Vorrichtung von etwa 23°C eine Wassermenge von etwa 15 l so erwärmt werden kann, dass in einem Pflegeprozess des Haushaltgeräts, insbesondere in einem Waschvorgang, die Aufheizzeit des zugeleiteten Betriebswassers um etwa vier Minuten reduziert werden kann. Dies führt zu einer Reduzierung des Energieverbrauchs um etwa 0,14 kWh. Nicht zuletzt kann durch eine derartige Verwendung einer Vorrichtung zur Erwärmung des Betriebswassers auch eine verbesserte Waschmittelauflösung beim Pflegeprozess im Haushaltgerät erreicht werden.

Das von der Vorrichtung in einen Behälter des Haushaltgeräts, insbesondere in einen Laugen- oder Spülbehälter, einlaufende erwärmte Betriebswasser hat im Wesentlichen die Temperatur der Umgebung der Vorrichtung und es wird somit weniger Energie und weniger Zeit für die weitere Wassererwärmung im Haushaltgerät beim Durchführen eines Pflegeprozesses erforderlich.

Ausführungsbeispiele der Erfindung werden nachfolgend anhand schematischer Zeichnungen näher erläutert. Es zeigen:
- Fig. 1: eine schematische Darstellung eines Haushaltgeräts und einer Vorrichtung zum Erwärmen von Betriebswasser;
- Fig. 2: eine schematische Draufsicht auf ein Ausführungsbeispiel einer erfindungsgemäßen Vorrichtung; und
- Fig. 3: eine Längsschnittdarstellung der Vorrichtung gemäß Fig. 2.

In den Figuren werden gleiche oder funktionsgleiche Elemente mit den gleichen Bezugszeichen versehen.

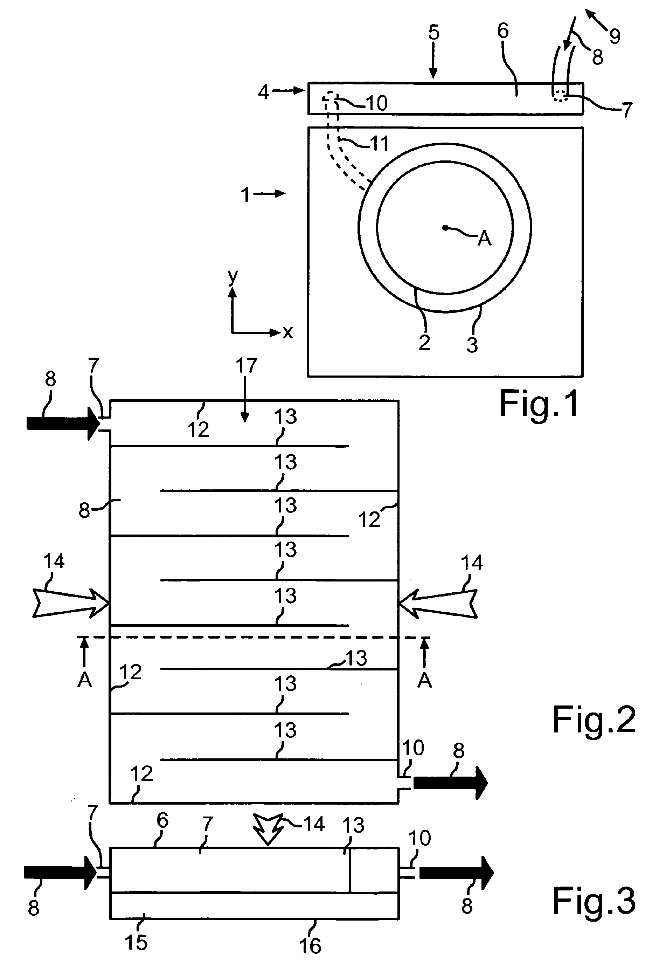

In Fig. 1 ist in einer schematischen Frontansicht ein Haushaltgerät zur Pflege von Wäschestücken dargestellt, welches als Waschmaschine 1 ausgebildet ist. Die Waschmaschine 1 umfasst eine Trommel 2, welche um eine senkrecht zur Figurenebene orientierte Achse A drehbar gelagert ist. Die Trommel 2 ist zur Aufnahme von Wäschestücken ausgebildet. Darüber hinaus umfasst die Waschmaschine 1 einen Laugenbehälter 3, welcher die Trommel 2 umfangsseitig umgibt, und in welchen Wasser bzw. eine Waschlauge eingeleitet wird, wenn ein Waschvorgang durchgeführt wird.

Darüber hinaus ist in Fig. 1 ein Einbaumöbel gezeigt, welches eine Arbeitsplatte 4 umfasst. Die Arbeitsplatte 4 ist in vertikaler Richtung (y-Richtung) über der Waschmaschine 1 angeordnet, wobei die Waschmaschine 1 in einem Einbauraum unterhalb der Arbeitsplatte 4 aufgestellt ist.

Darüber hinaus ist eine Vorrichtung 5 zur Erwärmung von Betriebswasser 8, welches über ein Versorgungsnetz 9 zuläuft, ausgebildet. Die Vorrichtung 5 umfasst einen Behälter 6, welcher in der Arbeitsplatte 4 integriert ist. Der Behälter 6 weist einen Einlass bzw. einen Eingang 7 auf, welcher mit einer Schlauchverbindung verbunden ist, wobei über diesen Schlauch und den Eingang 7 das Betriebswasser 8 in den Behälter 6 strömt. An der gegenüberliegenden Seite, in horizontaler Richtung (x-Richtung) betrachtet, umfasst der Behälter 6 einen Auslass bzw. einen Ausgang 10, welcher ebenfalls mit einem Schlauch 11 verbunden ist, welcher in die Waschmaschine 1 führt, so dass das von dem Behälter 6 ausströmende Betriebswasser über den Schlauch 11 und gegebenenfalls weitere Komponenten in den Laugenbehälter 3 geleitet werden kann.

Die Vorrichtung 5 mit dem Behälter 6 ist zur Wärmespeicherung einer Wärmeenergie 14 (Fig. 2) ausgebildet, wobei diesbezüglich die Wände des Behälters 6 sich auf die Temperatur der Umgebung des Behälters 6 und somit auf die Temperatur im Aufstellraum der Waschmaschine 1 erwärmen, wobei diese Wärmeenergie dann insbesondere über die Wände des Behälters 6 an das sich in dem Behälter 6 befindliche Betriebswasser 8 abgegeben wird.

Insbesondere ist die Vorrichtung 5 mit dem Behälter 6 als latenter Wärmeenergiespeicher ausgebildet.

In Fig. 2 ist eine Draufsicht auf die Arbeitsplatte 4 und somit auch auf die Vorrichtung 5 mit dem Behälter 6 gezeigt. Der Behälter 6 weist einen Innenraum auf, welcher es ermöglicht, eine Wassermenge von beispielsweise 15 l aufzunehmen. Im Inneren des Behälters 6 ist ein Strömungskanal 17 ausgebildet, welcher vorzugsweise zum einen durch die Innenwand 12 des Behälters 6 und zum anderen durch weitere Trennwände 13 begrenzt ist. Gemäß der in Fig. 2 gezeigten Ausführung sind die Trennwände 13 parallel zueinander orientiert und so an den Innenwänden 12 angeordnet, dass sich eine mäanderförmige und somit auch schlangenförmige Windung des Strömungskanals 17 durch den Behälter 6 ergibt. Das über den Zulauf bzw. den Eingang 7 zuströmende relativ kalte Betriebswasser 8, welches eine kältere Temperatur aufweist, als die Umgebungstemperatur im Aufstellraum der Waschmaschine 1, wird somit quasi durch den Strömungskanal 17 geleitet, wobei es die gespeicherte Wärmeenergie 14 aufnimmt und erwärmt wird. Insbesondere weist das Betriebswasser 8 im Behälter 6 dann eine Temperatur auf, welche der Temperatur der Umgebung der Waschmaschine 1 entspricht. Die Waschmaschine 1 ist somit mit einem Energiespeicher bzw. einer Vorrichtung 5 verbunden, welche das zulaufende Wasser erwärmt. Insbesondere wird diese Vorrichtung 5 in einer Phase der Nichtbenutzung der Waschmaschine 1 aufgeladen und auf die Temperatur des Aufstellraums gebracht. Beim Wasserzulauf wird die dabei aufgenommene Wärmeenergie an das Betriebswasser 8 abgegeben. Das über den Ausgang 10 zum Laugenbehälter 3 strömende Betriebswasser 8 hat dadurch die Temperatur des Aufstellraums und es wird weniger Energie und weniger Zeit für die weitere Erwärmung des Wassers in der Waschmaschine 1 benötigt.

In der gezeigten Ausführungsform ist somit ein latenter Wärmeenergiespeicher gezeigt, bei dem das Speichermedium das Betriebswasser 8 selbst ist. In der Phase der Nichtbenutzung der Waschmaschine 1 wird der Behälter 6 vollständig mit zulaufendem Betriebswasser 8 gefüllt und dann sowohl der Eingang 7 als auch der Ausgang 10 mit nicht näher dargestellten Ventilen verschlossen. Das dann in dem Behälter 6 befindliche Betriebswasser 8 nimmt die gespeicherte Wärmeenergie auf.

Wird dann im Nachfolgenden dieses Betriebswasser 8 für einen Waschvorgang benötigt, wird vorzugsweise das Ventil am Ausgang 10 und auch das Ventil am Eingang 7 geöffnet und durch das über den Eingang 7 zuströmende relativ kalte Betriebswasser 8 wird das in dem Behälter 6 befindliche erwärmte Betriebswasser 8 durch den Strömungskanal 17 gedrückt und entsprechend verdrängt und aus dem Ausgang 10 ausgestoßen. Durch den Strömungskanal 17 wird einerseits nicht nur eine möglichst vielfältige Berührung des strömenden Betriebswassers 8 in dem Behälter 6 mit den Innenwand 12 erzeugt, sondern darüber hinaus auch verhindert, dass sich eine relativ große Menge von erwärmtem Betriebswasser 8 in dem Behälter 6 mit dem relativ kalten zulaufenden Betriebswasser 8 vermengt und somit kann auch eine unerwünscht starke Abkühlung einer relativ großen Menge von bereits erwärmtem Betriebswasser 8 im Behälter 6 vermieden werden.

In Fig. 3 ist eine schematische Längsschnittdarstellung der Vorrichtung 5 gemäß Fig. 2 entlang der Schnittlinie AA gezeigt. Dabei ist zu erkennen, dass eine Wärmeisolierung 15 an dem Boden des Behälters 6 vollflächig ausgebildet ist, wobei somit die der Waschmaschine 1 zugewandte Seite 16 wärmetechnisch isoliert ist. Ein Wärmeübergang aus dem Inneren der Waschmaschine 1 an die Vorrichtung 5 und somit eine damit gegebenenfalls verbundene Kondensation von Raumluftfeuchte an der Innenseite des Behälters 6 kann dadurch verhindert werden, wodurch auch ein Wärmeentzug von dem in dem Behälter 6 befindlichen und erwärmten Betriebswasser 8 verhindert werden kann.

In einer alternativen Ausführung ist die in Fig. 1 dargestellte Arbeitsplatte 4 kein Bestandteil eines Einbaumöbels sondern ein integrales Bestandteil der Waschmaschine 1. Das heißt, dass die Arbeitsplatte 4 mit der Vorrichtung 5 fest mit der Waschmaschine 1 verbunden ist.

Die vorstehend genannten Ausführungsbeispiele der Vorrichtung für eine Waschmaschine sowie der Waschmaschine selbst gelten entsprechend auch für Geschirrspülmaschinen.

## Patentansprüche

1. Vorrichtung zur Erwärmung von Betriebswasser (8) für ein wasserführendes Haushaltgerät (1) insbesondere ein Haushaltgerät zur Pflege von Wäschestücken, welche zur Wärmespeicherung einer Wärmeenergie und zur Abgabe der Wärmeenergie an das Betriebswasser (8) ausgebildet ist, wobei die Vorrichtung (5) zur Wärmespeicherung der die Vorrichtung (5) umgebene Wärmeenergie (14) ausgebildet ist, **dadurch gekennzeichnet, dass** die Vorrichtung (5) als latenter Wärmeenergiespeicher mit einem Wärmetauscher mit einem Speichermedium für die Wärmeenergie ausgebildet ist und die Temperatur des Phasenübergang des Arbeitsmediums des Wärmetauschers auf eine Temperatur zwischen 20°C und 22°C eingestellt ist

2. Vorrichtung nach Anspruch 1; **dadurch gekennzeichnet, dass** die Vorrichtung (5) an das Wasserversorgungsnetz (9) angeschlossen ist und mit dem Haushaltgerät (1) verbunden ist.

3. Vorrichtung nach einem der vorhergehenden Ansprüche, **dadurch gekennzeichnet, dass** die Vorrichtung (5) zur Aufnahme einer für ein Waschprogramm und/oder ein Spülprogramm erforderlichen Menge von Betriebswasser (8), insbesondere mindestens 10 Liter, ausgebildet ist.

4. Vorrichtung nach einem der vorhergehenden Ansprüche, **dadurch gekennzeichnet, dass** die Vorrichtung (5) zur Abgabe der aufgenommenen Wärmeenergie (14) an das Betriebswasser (8) in einer deaktivierten Phase des Haushaltgeräts (1) ausgebildet ist

5. Vorrichtung nach einem der vorhergehenden Ansprüche, **dadurch gekennzeichnet, dass** die Vorrichtung (5) einen Behälter (6) zur Aufnahme des Betriebswassers (8) aufweist, welcher zur Aufnahme der Wärmeenergie (14) ausgebildet ist.

6. Vorrichtung nach Anspruch 5, **dadurch gekennzeichnet, dass** bei der Vorrichtung (5) in dem Behälter (6) ein gewundener, insbesondere schlangenförmiger. Strömungskanal (17) ausgebildet ist.

7. Vorrichtung nach Anspruch 6, **dadurch gekennzeichnet, dass** bei der Vorrichtung (5) die Innenwand (12) des Behälters (6) und Trennwände (13) im Behälter (6) den Strömungskanal (17) bilden.

8. Vorrichtung nach einem der vorhergehenden Ansprüche, **dadurch gekennzeichnet, dass** bei der Vorrichtung (5) Ventile am Eingang (7) und/oder Ausgang (10) der Vorrichtung (5), insbesondere des Behälters (6), angeordnet sind.

9. Vorrichtung nach einem der vorhergehenden Ansprüche, **dadurch gekennzeichnet, dass** bei der Vorrichtung (5) an einer Seite (16) eine Einrichtung (15) zur Wärmeisolation ausgebildet ist.

10. Vorrichtung nach Anspruch 9, **dadurch gekennzeichnet, dass** bei der Vorrichtung (5) die Einrichtung eine an der Innenseite (12) des Behälters (6) angeordnete Wärmeisolationsschicht (15) aufweist.

11. Vorrichtung nach einem der Ansprüche 5 bis 10, **dadurch gekennzeichnet, dass** die Vorrichtung (5), insbesondere der Behälter (6), extern zum Haushaltgerät (1) angeordnet ist, insbesondere in einem Einbaumöbel (4) angeordnet, insbesondere integriert ist.

12. Vorrichtung nach Anspruch 11, **dadurch gekennzeichnet, dass** die Einrichtung (15) zur Wärmeisolation an einer dem Haushaltgerät (1) zugewandten Seite (16) ausgebildet ist.

13. Vorrichtung nach einem der vorhergehenden Ansprüche, **dadurch gekennzeichnet, dass** die Vorrichtung (5) in einer Arbeitsplatte (4) integriert ist, unter welcher das Haushaltgerät (1) aufgestellt ist.

14. Wasserführendes Haushaltgerät, welches die Vorrichtung (5) zur Erwärmung von Betriebswasser (8) nach einem der Ansprüche 1 bis 10 umfasst.

15. Haushaltgerät nach Anspruch 14, **dadurch gekennzeichnet, dass** die Vorrichtung (5) in einer Arbeitsplatte (4) des Haushaltgeräts (1) integriert ist.

## Claims

1. Device for heating process water (8) for a water-conducting domestic appliance (1), particularly a domestic appliance for the care laundry articles, which is constructed for heat storage of a heat energy and for delivery of the heat energy to the process water (8), wherein the device (5) is constructed for heat storage of the heat energy (14) surrounding the device (5), **characterised in that** the device (5) is constructed as a latent heat energy store with a heat exchanger with a storage medium for the heat energy and the temperature of the phase transition of the working medium of the heat exchanger is set to a temperature between 20° C and 22° C.

2. Device according to claim 1, **characterised in that** the device (5) is connected with the water supply mains (9) and with the domestic appliance (1).

3. Device according to one of the preceding claims, **characterised in that** the device (5) is constructed for receiving a quantity, which is required for a washing program and/or a rinsing program, of process water (8), particularly at least 10 litres.

4. Device according to any one of the preceding claims, **characterised in that** the device (5) is constructed for delivery of the received heat energy (14) to the process water (8) in a deactivated phase of the domestic appliance (1).

5. Device according to any one of the preceding claims, **characterised in that** the device (5) comprises a container (6) for receiving the process water (8), which is constructed for receiving the heat energy (14).

6. Device according to claim 5, **characterised in that** with respect to the device (5) a wound, particularly loop-shaped, flow channel (17) is formed in the container (6).

7. Device according to claim 6, **characterised in that** with respect to the device (5) the inner wall (12) of the container (6) and the partition walls (13) in the container (6) form the flow channel (17).

8. Device according to any one of the preceding claims, **characterised in that** with respect to the device (5) valves are arranged at the inlet (7) and/or outlet (10) of the device (5), particularly the container (6).

9. Device according to any one of the preceding claims, **characterised in that** with respect to the device (5) means (15) for thermal insulation is formed at one side (16).

10. Device according to claim 9, **characterised in that** with respect to the device (5) the means comprises a thermal insulation layer (15) arranged at the inner side (12) of the container (6).

11. Device according to any one of claims 5 to 10, **characterised in that** the device (5), particularly a container (6), is arranged externally of the domestic appliance (1), particularly arranged in built-in module (4), particularly integrated.

12. Device according to claim 11, **characterised in that** the means (15) for thermal insulation is formed at a side (16) facing the domestic appliance (1).

13. Device according to any one of the preceding claims, **characterised in that** the means (15) is integrated in a worktop (4) below which the domestic appliance (1) is erected.

14. Water-conducting domestic appliance which comprises the device (5) for heating process water (8) according to any one of claims 1 to 10.

15. Domestic appliance according to claim 14, **characterised in that** the device (5) is integrated in a worktop (4) of the domestic appliance (1).

## Revendications

1. Dispositif pour réchauffer de l'eau de service (8) pour un appareil ménager (1) véhiculant de l'eau, en particulier un appareil ménager pour l'entretien de pièces de linge, qui est conçu pour le stockage de chaleur d'une énergie thermique et pour la remise de l'énergie thermique à l'eau de service (8), le dispositif (5) étant conçu pour le stockage de chaleur de l'énergie thermique (14) entourant le dispositif (5), **caractérisé en ce que** le dispositif (5) est conçu sous forme d'accumulateur latente d'énergie thermique doté d'un échangeur de chaleur avec un fluide accumulateur pour l'énergie thermique et la température de la transition de phase du fluide de travail de l'échangeur de chaleur est réglée sur une température comprise entre 20°C et 22°C.

2. Dispositif selon la revendication 1, **caractérisé en ce que** le dispositif (5) est raccordé au réseau d'alimentation en eau (9) et est relié à l'appareil ménager (1).

3. Dispositif selon l'une des revendications précédentes, **caractérisé en ce que** le dispositif (5) est conçu pour la réception d'une quantité d'eau de service (8) qui est nécessaire pour un programme de lavage et/ou un programme de rinçage, en particulier d'une quantité d'au moins 10 litres,.

4. Dispositif selon l'une des revendications précédentes, **caractérisé en ce que** le dispositif (5) est conçu pour la remise de l'énergie thermique (14) absorbée à l'eau de service (8) lorsque l'appareil ménager (1) est dans une phase désactivée.

5. Dispositif selon l'une des revendications précédentes, **caractérisé en ce que** le dispositif (5) présente un récipient (6) pour la réception de l'eau de service (8), lequel est conçu pour la réception de l'énergie thermique (14).

6. Dispositif selon la revendication 5, **caractérisé en ce qu'**un canal d'écoulement (17) sinueux, en particulier en forme de serpent, est réalisé sur le dispositif (5) dans le récipient (6).

7. Dispositif selon la revendication 6, **caractérisé en ce que**, sur le dispositif (5), la paroi interne (12) du récipient (6) et des parois de séparation (13) forment le canal d'écoulement (17) dans le récipient (6).

8. Dispositif selon l'une des revendications précédentes, **caractérisé en ce que**, sur le dispositif (5), des vannes sont disposées sur l'entrée (7) et/ou la sortie (10) du dispositif (5), en particulier du récipient (6).

9. Dispositif selon l'une des revendications précédentes, **caractérisé en ce que**, sur le dispositif (5), un équipement (15) pour l'isolation thermique est réalisé sur un côté (16).

10. Dispositif selon la revendication 9, **caractérisé en ce que**, sur le dispositif (5), l'équipement présente une couche d'isolation thermique (15) disposée sur le côté intérieur (12) du récipient (6).

11. Dispositif selon l'une des revendications 5 à 10, **caractérisé en ce que** le dispositif (5), en particulier le récipient (6), est disposé de façon externe par rapport à l'appareil ménager (1), en particulier dans un meuble encastré (4), en particulier est intégré.

12. Dispositif selon la revendication 11, **caractérisé en ce que** l'équipement (15) pour l'isolation thermique est conçu sur un côté (16) tourné vers l'appareil ménager (1).

13. Dispositif selon l'une des revendications précédentes, **caractérisé en ce que** le dispositif (5) est intégré dans un plateau de travail (4), sous lequel l'appareil ménager (1) est installé.

14. Appareil ménager véhiculant de l'eau, qui comprend le dispositif (5) pour réchauffer de l'eau de service (8) selon l'une des revendications 1 à 10.

15. Appareil ménager selon la revendication 14, **caractérisé en ce que** le dispositif (5) est intégré dans un plateau de travail (4) de l'appareil ménager (1).
